# EUROPEAN PATENT SPECIFICATION

(11) **EP 2 742 254 B1**
(45) Date of publication and mention of the grant of the patent: **21.12.2016**
(21) Application number: 12773392.1
(22) Date of filing: 09.08.2012
(51) Int. Cl.: F16F 7/116, F16F 7/14, F16F 15/06

(54) **HYSTERETIC TUNED-MASS DAMPER DEVICE (TMD) FOR PASSIVE CONTROL OF MECHANICAL VIBRATIONS**
HYSTERESE EINGESTELLTER PASSIVER MASSEDÄMPFER
AMORTISSEUR PASSIF DE VIBRATION AJUSTÉ AVEC HYSTÉRÈSE

(30) Priority: 10.08.2011 IT RM20110434
(43) Date of publication of application: 18.06.2014
(73) Proprietor: Universita' Degli Studi di Roma "La Sapienza", 00185 Roma (RM) (IT)
(72) Inventor: VESTRONI, Fabrizio, 00185 Roma (RM) (IT); LACARBONARA, Walter, 00185 Roma (RM) (IT); CARPINETO, Nicola, 00148 Roma (IT)
(74) Representative: Perronace, Andrea
(86) International application number: PCT/IT2012/000253
(87) International publication number: WO 2013/042152

(56) References cited:
- DE-A1- 1 500 649
- DE-A1- 3 816 033
- DE-U- 7 306 006
- SU-A1- 889 963
- US-A- 3 165 945
- US-A- 3 450 379

## Description

The present invention concerns a hysteretic tuned-mass damper device (TMD) for passive control of mechanical vibrations.

In particular, the present invention concerns a tuned-mass damper device undergoing a translational motion, which utilises multiple wire ropes and therefore presents a hysteretic cycle, ensuring a particularly effective damping.

Devices for control of mechanical vibrations are known in the literature.

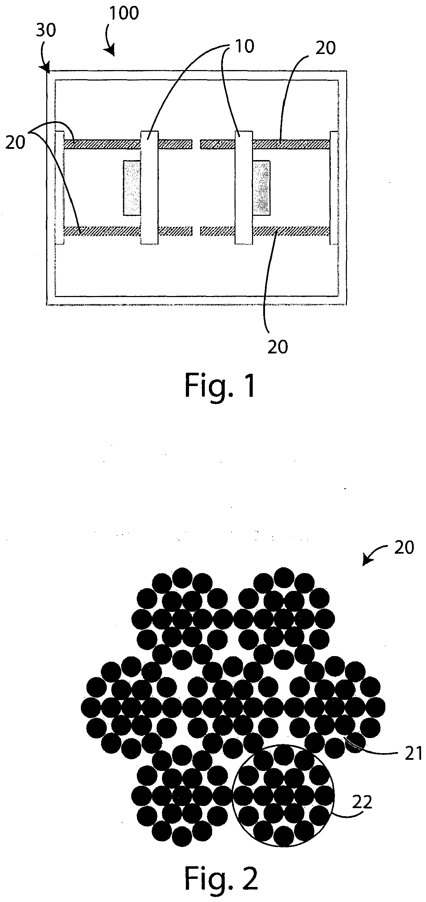

The US Patent 1,675,391 of G. H. Stockbridge (July 3, 1928, indicated as B1 in the bibliography) describes a device for the reduction of galloping vibrations of the cables of electric power lines due to the wind external force. The device shown in figure 1 of B1 is composed by a rope of resilient material, of limited length, connected at the centre to an electrical cable, whilst two masses are attached at the ends of the rope. During normal functioning, the masses oscillate vertically, thus reducing the vibrations of the main cable, and stressing under flexure the small rope of the damper, according to the static scheme of a cantilever.

In the US patent 3,165,945 A of G. M. Magrum (January 19, 1965, B2), a rotational damper for shafts is proposed, which is constituted by a ring that is coaxial to the axle and connected to it by short radial wire ropes. Another rotational damper is proposed by patent SU 889963 A1 of N. M. Myasnikov (December 15, 1981, B3), which presents a different and more complex braided disposition of the small diameter wire ropes. The patent DE 15 00 649 A1 of AEROFLEX LAB INC (10 July 1969, B4) proposes an inertial damper made of a movable mass subjected to a three-dimensional motion and connected to a metallic casing by means of inclined wire ropes.

Different patent documents refer to the use of wire ropes as damping elements to realise dynamic isolation.

In the patent DE 73 05 006 U (May 24, 1973, B5), the bent wire ropes are utilised as dissipation elements in the framework of the bearings-isolators, therefore with features that are notably different with respect to those utilised by the present invention for the initial bending and the insertion into bearing equipments, to the end of isolating the structure from the dynamic effects of a motion occurring at the base. Similarly, in US 3,450,379 A of T. H. Nolan (June 17, 1969, B6), the wire ropes are proposed to effect dynamic isolation and not in the framework of an inertial damper.

Moreover, in WO 2009/082399 A1 of GKN DRIVELINE NORTH AMERICA, C. A. Campbell, and A. Ball (July 2, 2009, B7), the wire ropes are used as damping/isolation elements in the framework of transmission axles.

In the more recent US patent application No. 20110017561 of M. Tanaka (January 27, 2011, B8), a vibration control device is described that is based on wire ropes having metallic wires with helicoidal disposition, wherein one or more devices support a movable mass contained in an external casing.

In the manuscripts B9 and B10 of Gerges and Vickery, the functioning of a tuned mass damper device is described, which is based on springs constituted by metallic ropes that are subjected to traction/compression cycles. The springs have been characterised by experimental tests, obtaining stiffness and damping values that are equivalent to those of a viscoelastic device. The device is constituted by a pendulum connected to the main structure. A spring made of a metallic rope works as a connection between the secondary mass and the main mass.

The damping device called "Stockbridge damper" in the above-mentioned patent document B1 has been the first to inspire the subsequent development of all devices based on the use of wire ropes. However, the "Stockbridge damper", that has been designed for cables of electrical power lines and is characterised by flexibility and lightness, is based on a quite simple functioning concept: it deals with small movable masses joined at the ends of short metallic ropes, therefore functioning as cantilevers. These entails that, in the fundamental vibrational mode, the curvature of the wire ropes along the span does not change its sign in any instant of time of its working. The so-conceived device does not adapt itself to more rigid and heavy structures, for which the movable masses must be well secured to the main structure, and must be able to move only along the effective direction and be subjected to larger dampings. In B1, no design methodology is provided for the Stockbridge damper.

In the above-mentioned recent patent application US Patent 20110017561 (B8), a device, constituted by a mass movable in a vertical direction and borne on wire ropes, that are disposed in helicoidal coils, is conceived to damp vibrations also in large structures. The limit of this disposition is that the tuning operation is more complex and, more importantly, an easy re-tuning is not permitted without changing the number of the helicoidal wire rope bearing elements.

It is the object of the present invention to provide a tuned mass damper device which solves the problems and overcomes the drawbacks of the prior art.

It is the subject-matter of the present invention a hysteretic tuned-mass damper for passive control of mechanical vibrations due to a translational motion, comprising at least a frame to which at least one tuned mass is connected by connection means, characterised in that:
- said at least one tuned mass is freely movable along at least a translational direction;
- said connection means are constituted by a plurality of wire ropes, which are substantially straight in the unloaded condition,
- the wire ropes are connected at one end directly to said frame and at the opposite end directly to said at least one tuned mass, in such a way that they are substantially perpendicular to said at least a translational direction in the unloaded condition;
- At least two wire ropes are connected on opposite sides of at least a tuned mass and at least a frame.

Preferably according to the invention, only one tuned mass is connected to said frame.

Preferably according to the invention, said frame presents two opposed walls to which said one tuned mass is connected by two series of opposed wire ropes.

Preferably according to the invention, said frame has cylindrical form and a tuned mass is comprised which is composed by two disks joined by a hollow cylindrical shaft, said plurality of wire ropes being connected radially between said shaft and said frame.

Preferably according to the invention, two tuned masses are connected to said frame.

Preferably according to the invention, said frame presents two opposed walls, said two tuned masses, in particular of planar form, being connected to said frame by means of two series of opposed wire ropes.

Preferably according to the invention, the two tuned masses are connected with each other by interconnection means.

Preferably according to the invention, said interconnection means are one or more further wire ropes.

Preferably according to the invention, said interconnection means are threaded bars fixed with corresponding bolts.

Preferably according to the invention, said at least a frame is a rigid frame.

Preferably according to the invention, said wire ropes are made of steel or other metallic alloy.

It is further subject-matter of the present invention a hysteretic tuned-mass damper for passive control of mechanical vibrations due to translational motion, comprising at least a frame to which at least one tuned mass is connected by connection means, characterised in that:
- said at least one tuned mass is freely movable along at least a translational direction without any obstruction in the whole range of movement allowed by the wire ropes;
- said connection means are constituted by a plurality of wire ropes, which are substantially straight in the unloaded condition,
- the wire ropes are connected at one end to said frame and at the opposite end directly to said at least one tuned mass, in such a way that they are substantially perpendicular to said at least a translational direction in the unloaded condition.

Preferably according to the invention, said tuned mass is made hanging from a wall of said frame along the gravity direction, to which it is connected by the wire ropes.

Preferably according to the invention, said frame is placed below said tuned mass along the direction of the gravity force, said tuned mass is a spherical mass connected to said frame by said plurality of wire ropes, arranged according to a radial symmetry with respect to the spherical mass.

Preferably according to the invention:
- said at least one tuned mass is a spherical mass;
- said spherical mass is made hanging from a top reference frame by suspension means;
- said spherical mass is connected by said plurality of wire ropes, disposed in a radially symmetric fashion with respect to the spherical mass, to a bottom frame constituting said frame.

It is further specific subject-matter of the present invention a use of the damper according to the invention, for damping oscillations in a structure, wherein the frame is rigidly connected to a flat element of the structure.

It is further specific subject-matter of the present invention a use of the damper according to the invention, for damping oscillations in high-rise buildings, in particular skyscrapers, wherein the top frame is fast connected to one of the top floors and the bottom frame is fast connected to the floor underneath.

The invention will be no described by way of illustration but not by way of limitation, with particular reference to the drawings of the enclosed figures, wherein:
- figure 1 shows an embodiment of the tuned mass damper device according to the invention, with steel wire ropes subjected to flexure;
- figure 2 shows a disposition of 133 wires in a particular embodiment of the wire rope having seven strands with 19 wires each, according to the invention;
- figure 3 shows some embodiments of the tuned mass damper device with steel wire ropes: masses connected by small diameter wire ropes (a), connected (b) or separated (c) masses;
- figure 4 shows two possible configurations of the device according to the invention, with vertical functioning;
- figure 5 shows two possible configurations of the device according to the invention: horizontal functioning in two configurations (a) and (b);
- figure 6 shows a dissipation element of the TMD device according to the invention realised as a prototype with steel wire ropes, in two different stress states (a) and (b):
- figure 7 shows the identification of the characteristic parameters of the device made of metallic wire ropes, i.e. of the constitutive coefficients starting from the force-displacement hysteresis cycles (on the top) wherein the circles represent the experimental measurements and the continuous lines the analytical model predictions;
- figure 8 shows the theoretical-experimental performances of the device in the presence of harmonic external force;
- figure 9 shows the performances of the device in the presence of a random external force; band pass filter: +/- 33% frequency of the main system (on the left), +/- 7% frequency of the main system (on the right);
- figure 10 shows an embodiment of the damper according to the invention;
- figure 11 shows examples of hysteresis cycles at increasing amplitudes for the 7x19 wire ropes of figure 1 and different lengths equal, respectively, to 80, 90, 100, 110, 120 millimetres.

The device according to the invention is a tuned mass damper device for the reduction of vibrations of different mechanical, civil, aerospace structures.

According to an embodiment, the device 100 according to the invention is constituted by a flat frame 13, closed or open, inside which the movable masses 10 are contained (figure 1).

Such masses 10 are connected to the frame 30 by means of steel wire ropes 20 subjected to cyclic flexure during the oscillations of the masses 10. Preferably, the cross-section of the rope 20 is composed by seven strands 22 disposed according to the geometry of figure 2. In particular, each strand 22 is composed by 19 steel wires 21.

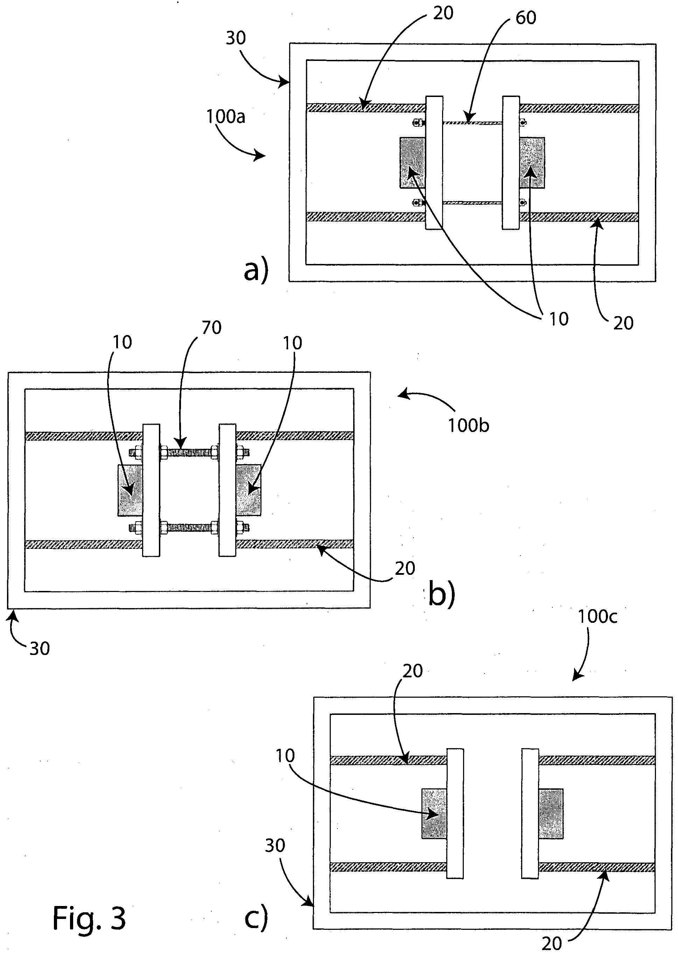

With regard to figure 3, the masses 10 can be free to move independently or they can be connected to each other in such a way to allow in any case a relative oscillation with respect to each other (figure 3,(a) connected masses, (b) independent masses).

In the embodiment of figure 3(a), the connection between the masses 10 is guaranteed by further wire ropes 60 of small diameter. The connection is useful to introduce a pre-tensioning so as to allow tunings at different frequencies and make the hardening nonlinear response of the wire ropes softer, allowing an optimal functioning of the resonant tuned mass even at amplitudes larger than the design optimal ones.

In the embodiment of figure 3(b), the connection is ensured by bolted bars 70 allowing the introduction of a pre-tension in the wire ropes 20, however they constraint the masses 10 to be subjected to a mono-directional, purely translational motion. This constraint introduces a hardening characteristic nonlinear response which can be unfavourable at large external force amplitudes by loss of tuning (i.e., the frequency of the resonant mass increases too rapidly). This embodiment - that is simpler than the embodiment of figure 3(a) - is suitable for applications wherein the variation range of the external force amplitude can be predictable with an acceptable probability. In this concern, the possible loss of optimum tuning condition does not introduce instability in the response of the system, but it entails a loss of effectiveness in the reduction of the vibrational amplitudes.

In the embodiment of figure 3(c), the masses are separated. The motion is not purely translational and mono-directional, because the masses are free to come closer in the direction of the axis of the wire ropes, although this component is very small with respect to the transverse component. This entails that the response of the wire ropes is softening. This device, at large external force amplitudes, can also undergo loss of tuning and effectiveness, however in a stronger way with respect to embodiment (b). This embodiment is clearly the most economical and is applicable to frameworks wherein the amplitude of the external force is deterministically known.

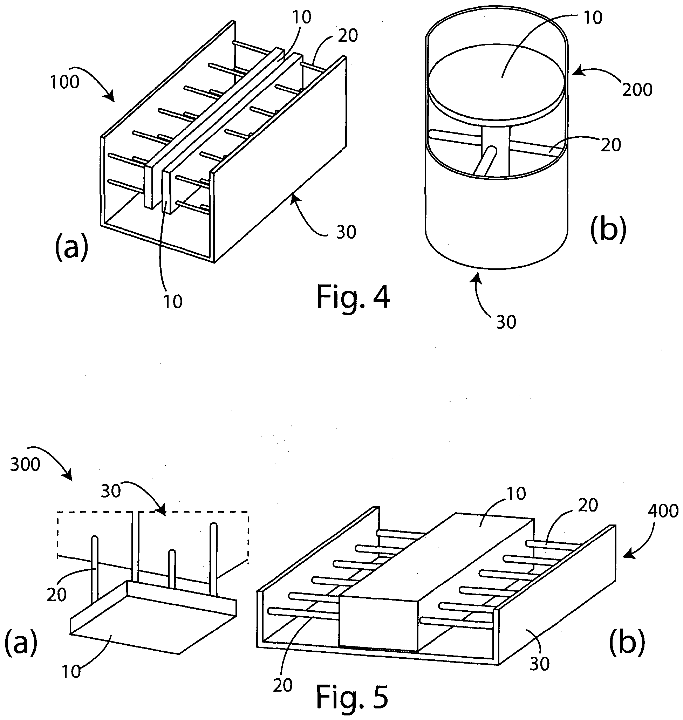

With regard to figure 4, the frame 30 can take a three-dimensional form by extrusion with respect to the orthogonal direction (parallelepiped, in (a)) or by revolution with respect to the symmetry axis (cylinder, in (b)). In the case of the cylinder, the wire ropes 20 will be disposed radially and will connect themselves to a smaller diameter cylinder 40 with two annular disks 50 connected to the two ends. The whole device, constituted by the internal cylinder and the disks, represents the movable mass that can slide along a lubricated central fixed shaft.

This configuration is particularly useful in mechanical, aerospace, civil applications, among which there are the bridges. In mechanical engineering applications, such as cars, in general vibrations are mainly vertical and the spaces that can house damping devices are limited. Moreover, the device must guarantee the position and protection of the movable mass.

With regard to figure 5, two further possible configurations 300 and 400 of the device according to the invention allow a horizontal functioning (horizontal oscillation of the masses). These configurations are useful in civil applications such as, for example, buildings and bridges. In multi-story buildings, the vibrations introduced by undulatory earthquakes are often mainly horizontal when the modes are translational (in the presence of structural uniformities and symmetries) as well as when they are torsional (in the presence of structural non-uniformities and asymmetries). In order to damp this kind of vibrations, the movable mass (or the movable masses) must perform its horizontal motion. The same occurs for lateral vibrations of bridges that can be damped by devices that are fastened to the deck section with horizontal movement of the masses.

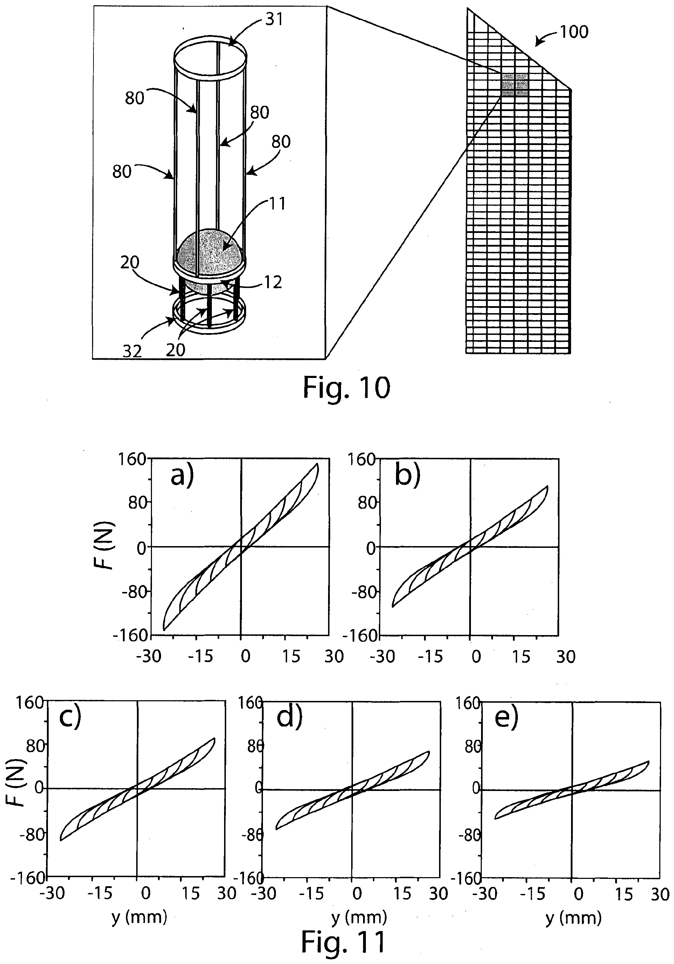

In figure 10, an embodiment scheme for multi-directional hysteretic TMDs for high-rise buildings 1000 is shown, wherein the movable mass is represented by a sphere that is suspended from a floor by means of a ring 31 (so as to avoid vertical loading of the wire ropes 20) and is connected, by means of a delimiting ring 12, to large diameter wire ropes 20 which, in turn, are connected to a ring beam 32 underneath.

The sphere is suspended by suitable ropes 80, so as to overcome buckling of the wire ropes 20, allowing at the same time a planar motion of the sphere (in the framework of infinitesimal kinematics). The wire ropes 20 are disposed according to a radial symmetry and provide horizontal hysteretic restoring forces which are transferred on the bottom connection frame that is inserted on the plane of the structure or the machinery whereon one wishes to apply the control forces.

This configuration is particularly important for structures such as for example buildings, towers, silos, power plants, that are characterised by a substantial axial symmetry (or plano-altimetric evenness) and for which control forces must be applied in any direction parallel to the plane.

In all cases, the length of the wire ropes 20 is regulated by positioning the movable masses 10 along the wire ropes 20 or by changing the joint point of the wire ropes 20 to the external frame 30, so as to give the possibility of tuning within a continuous frequency band.

The functions of stiffness and damping, conventionally effected by a linear spring and a viscoelastic damper connected in parallel, are here performed by one element only based on steel wire ropes (or any other metallic alloy or even any suitable material, including particularly resistant polymeric materials) subjected to predominant states of non-uniform bending or tension-flexure.

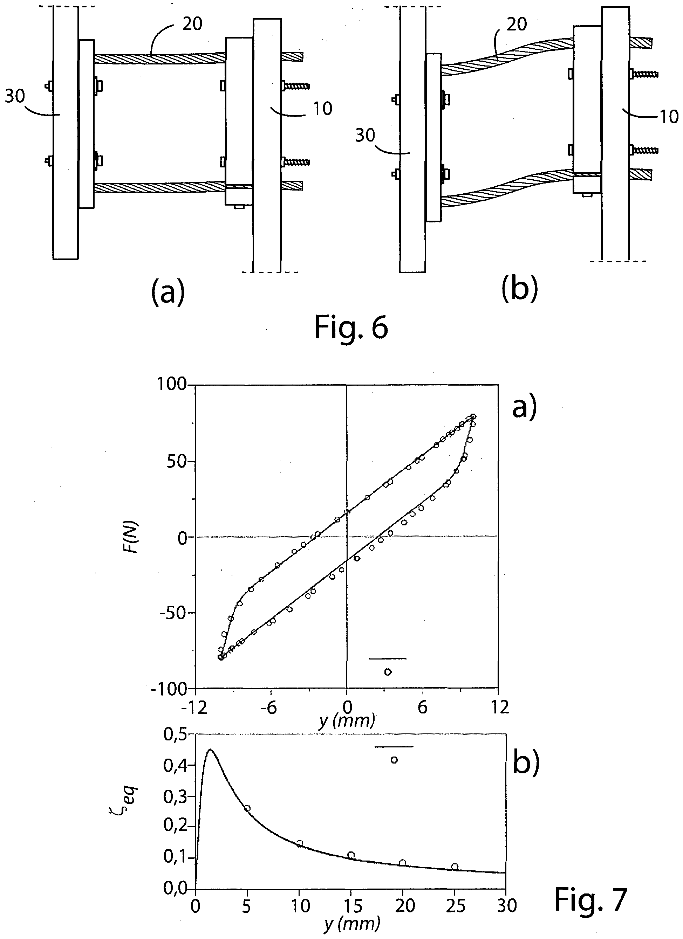

One of the most significant aspects of the present invention is the exploitation of the hysteretic behaviour of the wire ropes (cf. Figure 11), whose dissipative capability is to be attributed mainly to the friction that is developed between the wires constituting the wire ropes. In other devices of the prior art, the wire ropes are globally of small section and disposed in helicoidal coils. On the contrary, the functioning principle of the wire ropes subjected to flexure or tension-flexure allows an easier tuning of the TMD, exhibiting low stiffnesses and at the same time a sufficient degree of hysteretic dissipation. In particular, the configuration of the device according to the invention makes it possible that the movable masses, during the motion prevailing along an effective direction, induce a double bending of the wire rope which maximises the effects of the dissipation inter-wire friction and improves the damper behaviour (figure 6 (b)).

The hysteretic behaviour of the wire ropes is described by the Bouc-Wen constitutive model, which is able to represent the nonlinear characteristics of the restoring force with varying amplitudes of the cycles. The utilized model provides the equivalent damping of the hysteretic device for the different displacement amplitudes to which it is subjected, as shown in figure 7. In figure 11, other examples of hysteretic cycles are shown, with increasing amplitudes for the 7x19 wire ropes of figure 1 and having different lengths respectively equal to 80, 90, 100, 110, 120 mm. With respect to other viscoelastic tuned mass damper devices, the device of the present invention allows a significant reduction of the production costs, as well as the possibility of performing re-tuning or with a comparatively improved easiness. This strong reduction of the production costs makes it feasible from the technological and economic point of view to introduce into a structure (from the beginning, or by means of retrofitting) a set of TMDs so as to allow a realistic control of wider-band externally applied dynamic forces.

The performances of the experimentally tested prototype (manuscript of Lacarbonara et al., below cited) confirm a remarkable reduction of the oscillations induced by external forces of the harmonic and random types.

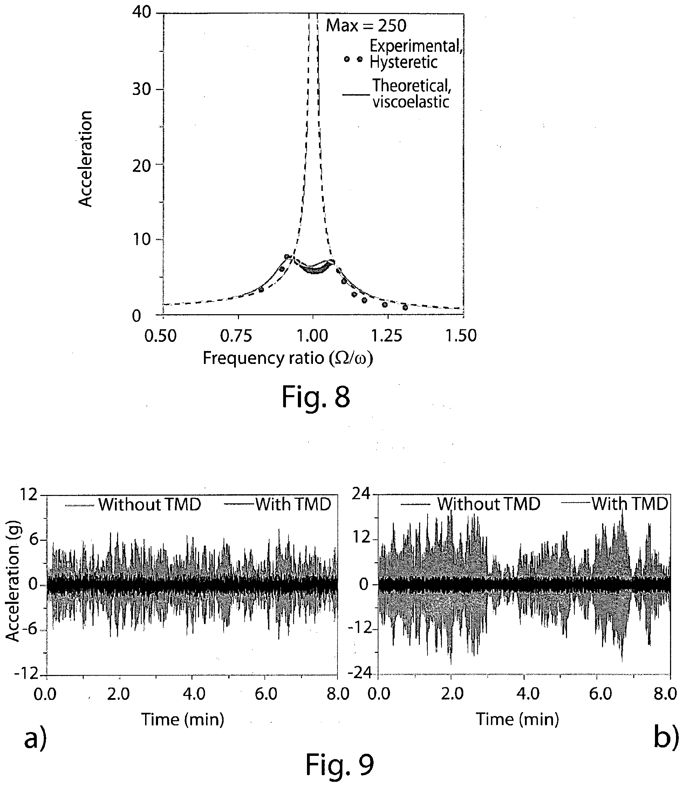

Concerning the harmonic type, one has performances comparable with those theoretically achievable by a classical viscoelastic device (figure 8). This type of classical device is obtained from the first tuned mass device without damping in the mean structure and in the added mass, due to Hermann Frahm in US Patent 989958 (1911). Subsequently, Den Hartog modified this device including also the viscous damping. This TMD, that is called viscoelastic tuned mass damper device, represents today the classical TMD. For the determination of the optimal stiffness and viscous damping parameters, one can use semi-empirical formulas. The viscoelastic TMD due to Den Hartog has not been the subject of patenting procedures.

There are theoretical-experimental evidences of performance improvements in the device according to the invention with respect to the viscoelastic one, when one takes into account all the nonlinearities and larger oscillations amplitudes, most importantly in the case of multiple TMD architecture to damp multiple vibration modes.

In the case of an external force of the random type, the effectiveness of the device is apparent from the comparison of the acceleration time histories relevant to a system with and without the hysteretic TMD. The applied signal is a white noise that has been filtered in an interval centred around the frequency of the mode controlled by the main system (figure 9).

The experimental performance of the system in terms of maximum acceleration are summarised in the following table.

| | Acceleration peak [g] | | |
|---|---|---|---|
| Filter frequency [Hz] | Without TMD | With TMD | Reduction % |
| 10-20 | 7,65 | 2,54 | -66,8 |
| 13,5-15,5 | 22,01 | 2,67 | -87,9 |
| 14,5 | 115,0 | 2,17 | -98,1 |

Depending on the application field, there may exist design or functional constraints of different types which lead to determine the optimal position of the device. The most rational choice consists however in placing the device in the point where one has the maximum displacement/acceleration of the mode to be controlled.

### Bibliography

1. US 1,675,391 A (STOCKBRIDGE, G.H.) 5 July 1928
2. US 3,165,945 A (MAGRUM, G. M.) 19 January 1965
3. SU 889 963 A1 (MYASNIKOV, N. M.) 15 December 1981
4. DE 73 05 006 U 24 May 1973
5. DE 15 00 649 A1 (AEROFLEX LAB INC) 10 July 1969
6. US 3,450,379 A (NOLAN, T.H.) 17 June 1969
7. WO 2009/082399 A1(GKN DRIVELINE NORTH AMERICA; CAMPBELL C. A.; BALL, A.) 2 July 2009
8. US 2011/0017561 (TANAKA M.), 27 January 2011
9. "Design of tuned mass dampers incorporating wire rope springs: Part I: Dynamic representation of wire rope springs", of R. R. Gerges, B. J. Vickery, 2005, Engineering Structures 27 (2005) 653¬661;
10. "Design of tuned mass dampers incorporating wire rope springs: Part II: Simple design method", of R. R. Gerges, B. J. Vickery, 2005, Engineering Structures 27 (2005) 662-674, I.
11. Hysteretic tuned mass dampers for structural vibration mitigation, N. Carpineto, W. Lacarbonara, F. Vestroni, Journal of Sound and Vibration 333 (5), 1302-1318

In the foregoing, the preferred embodiments have been described and some variations of the present invention have been suggested, but, it is to be understood that those skilled in the art could make modifications and variations without departing from the relative scope of the invention, as defined by the enclosed claims.

## Claims

1. Hysteretic tuned-mass damper (100,200,300,400) for passive control of mechanical vibrations due to translational motion, comprising at least a frame (30) to which at least one tuned mass is connected (10) by a plurality of wire (22) ropes (20), which are substantially straight in the unloaded condition, **characterised in that**:
- there are two tuned masses (10) connected by the wire ropes to opposite walls of said at least a frame;
- said two tuned masses (10) are freely movable along at least a translational direction;
- the wire ropes are connected at one end to said frame (30) and at the opposite end to the two tuned masses (10), in such a way that they are substantially perpendicular to said at least a translational direction in the unloaded condition;
- the two tuned masses are connected with each other by interconnection means.

2. Damper according to claim 1, **characterised in that** said two masses have planar form.

3. Damper according to claim 1 or 2, **characterised in that** said frame is flat.

4. Damper according to any claim 1-3, **characterized in that** said interconnection means are one or more further wire ropes.

5. Damper according to any claim 1-3, **characterized in that** said interconnection means are threaded bars fixed with corresponding bolts.

6. Damper according to any claim 1-5, **characterized in that** said at least a frame is a rigid frame.

7. Damper according to any claim 1-6, **characterized in that** said wire ropes are made of steel or other metallic alloy.

8. Hysteretic tuned-mass damper (100,200,300,400) for passive control of mechanical vibrations due to translational motion, comprising at least a frame (30) to which at least one tuned mass is connected (10) by by a plurality of wire (22) ropes (20), which are substantially straight in the unloaded condition, **characterised in that**:
- said at least one tuned mass is freely movable along at least a translational direction;
- the wire ropes are connected at one end to said frame (30) and at the opposite end directly to said at least one tuned mass (10), in such a way that they are substantially perpendicular to said at least a translational direction in the unloaded condition;
- said at least one tuned mass is a spherical mass (11);
- said spherical mass (11) is made hanging from a top reference frame by suspension means (80);
- said spherical mass (11) is connected by said plurality of wire ropes (20), arranged in a radial symmetry with respect to the spherical mass, to a bottom frame (32,33,34) constituting said frame.

## Patentansprüche

1. Hysterese eingestellter Massedämpfer (100, 200, 300, 400) zur passiven Steuerung von mechanischen Vibrationen aufgrund einer translatorischen Bewegung, der wenigstens einen Rahmen (30) aufweist, an dem wenigstens eine eingestellte Masse über eine Vielzahl von Draht-(22)-seilen (20) verbunden (10) ist, die im unbelasteten Zustand im Wesentlichen gerade sind, **dadurch gekennzeichnet, dass**:
- zwei eingestellte Massen (10) durch die Drahtseile an gegenüberliegenden Wänden von dem besagten wenigstens einen Rahmen verbunden sind;
- die besagten zwei eingestellten Massen (10) entlang wenigstens einer translatorischen Richtung bewegt werden können;
- die Drahtseile an einem Ende an dem besagten Rahmen (30) und an dem gegenüberliegenden Ende an den zwei eingestellten Massen (10) verbunden sind, auf eine solche Weise, dass sie in dem unbelasteten Zustand im Wesentlichen senkrecht zu der besagten wenigstens einen translatorischen Richtung sind;
- die zwei eingestellten Massen durch Verbindungsmittel miteinander verbunden sind.

2. Dämpfer nach Anspruch 1, **dadurch gekennzeichnet, dass** die besagten zwei Massen eine ebene Form haben.

3. Dämpfer nach Anspruch 1 oder 2, **dadurch gekennzeichnet, dass** der besagte Rahmen flach ist.

4. Dämpfer nach einem Anspruch 1-3, **dadurch gekennzeichnet, dass** die besagten Verbindungsmittel ein oder mehrere weitere Drahtseile sind.

5. Dämpfer nach einem Anspruch 1-3, **dadurch gekennzeichnet, dass** die besagten Verbindungsmittel Gewindestangen sind, die mit entsprechenden Bolzen fixiert sind.

6. Dämpfer nach einem Anspruch 1-5, **dadurch gekennzeichnet, dass** der besagte wenigstens eine Rahmen ein starrer Rahmen ist.

7. Dämpfer nach einem Anspruch 1- 6, **dadurch gekennzeichnet, dass** die besagten Drahtseile aus Stahl oder einer anderen metallischen Legierung hergestellt sind.

8. Hysterese eingestellter Massedämpfer (100, 200, 300, 400) zur passiven Steuerung von mechanischen Vibrationen aufgrund einer translatorischen Bewegung, der wenigstens einen Rahmen (30) aufweist, an dem wenigstens eine eingestellte Masse über eine Vielzahl von von Draht-(22)-seilen (20) verbunden (10) ist, die im unbelasteten Zustand im Wesentlichen gerade sind, **dadurch gekennzeichnet, dass**:
- die besagte wenigstens eine eingestellte Masse entlang wenigstens einer translatorischen Richtung frei bewegt werden kann;
- die Drahtseile an einem Ende an dem besagten Rahmen (30) und an dem gegenüberliegenden Ende direkt an der besagten wenigstens einen eingestellten Masse (10) verbunden sind, auf eine solche Weise, dass sie in dem unbelasteten Zustand im Wesentlichen senkrecht zu der wenigstens einen translatorischen Richtung sind;
- die besagte wenigstens eine eingestellte Masse eine sphärische Masse (11) ist;
- die besagte sphärische Masse (11) durch Aufhängungsmittel (80) von einem oberen Referenzrahmen hängend gemacht ist;
- die besagte sphärische Masse (11) durch die besagte Vielzahl von Drahtseilen (20), die in einer radialen Symmetrie in Bezug auf die sphärische Masse angeordnet sind, an einem unteren Rahmen (32, 33, 34), der den besagten Rahmen darstellt, verbunden ist.

## Revendications

1. Amortisseur hystérétique à masse accordée (100, 200, 300, 400) pour la régulation passive de vibrations mécaniques dues à un mouvement de translation, comprenant au moins un cadre (30) auquel au moins une masse accordée est reliée (10) par une pluralité de câbles (20) métalliques (22), qui sont sensiblement droits à l'état non chargé, **caractérisé en ce que** :
- il y a deux masses accordées (10) reliées par les câbles métalliques à des parois opposées dudit au moins un cadre ;
- lesdites deux masses accordées (10) sont librement mobiles le long d'au moins une direction de translation ;
- les câbles métalliques sont reliés à une extrémité audit cadre (30) et à l'extrémité opposée aux deux masses accordées (10), de telle sorte qu'ils sont sensiblement perpendiculaires à ladite au moins une direction de translation à l'état non chargé ;
- les deux masses accordées sont reliées l'une à l'autre par des moyens d'interconnexion.

2. Amortisseur selon la revendication 1, **caractérisé en ce que** lesdites deux masses ont une forme planaire.

3. Amortisseur selon la revendication 1 ou 2, **caractérisé en ce que** ledit cadre est plat.

4. Amortisseur selon l'une quelconque des revendications 1-3, **caractérisé en ce que** lesdits moyens d'interconnexion sont un ou plusieurs autres câbles métalliques.

5. Amortisseur selon l'une quelconque des revendications 1-3, **caractérisé en ce que** lesdits moyens d'interconnexion sont des barres filetées fixées avec des axes correspondants.

6. Amortisseur selon l'une quelconque des revendications 1-5, **caractérisé en ce que** ledit au moins un cadre est un cadre rigide.

7. Amortisseur selon l'une quelconque des revendications 1-6, **caractérisé en ce que** lesdits câbles métalliques sont réalisés en acier ou autre alliage métallique.

8. Amortisseur hystérétique à masse accordée (100, 200, 300, 400) pour la régulation passive de vibrations mécaniques dues à un mouvement de translation, comprenant au moins un cadre (30) auquel au moins une masse accordée est reliée (10) par une pluralité de câbles (20) métalliques (22), qui sont sensiblement droits à l'état non chargé, **caractérisé en ce que** :
- ladite au moins une masse accordée est librement mobile le long d'au moins une direction de translation ;
- les câbles métalliques sont reliés à une extrémité audit cadre (30) et à l'extrémité opposée directement à ladite au moins une masse accordée (10), de telle sorte qu'ils sont sensiblement perpendiculaires à ladite au moins une direction de translation à l'état non chargé ;
- ladite au moins une masse accordée est une masse sphérique (11) ;
- ladite masse sphérique (11) est réalisée suspendue à un cadre de référence supérieur par des moyens de suspension (80) ;
- ladite masse sphérique (11) est reliée par ladite pluralité de câbles métalliques (20), agencés en symétrie radiale par rapport à la masse sphérique, à un cadre inférieur (32, 33, 34) constituant ledit cadre.
